# EUROPEAN PATENT SPECIFICATION

(11) **EP 1 995 404 B1**
(45) Date of publication and mention of the grant of the patent: **01.02.2012**
(21) Application number: 08156631.7
(22) Date of filing: 21.05.2008
(51) Int. Cl.: E06B 1/60, F16B 37/02, B21D 53/24, E06B 5/16

(54) **Adjustable door frame and hinge fixation by means of a stamped and bent part**
Justierbare Türzargen- und Scharnierbefestigung mittels eines Stanzbiegeteils
Fixation ajustable pour charnière et dormant de porte par un pièce estampée et courbée

(30) Priority: 25.05.2007 SE 0701258
(43) Date of publication of application: 26.11.2008
(73) Proprietor: Daloc Futura AB, 545 21 Töreboda (SE)
(72) Inventor: Lindell, Lars, 54240 Mariestad (SE); Moberg, Jerry, 53238 Skara (SE)
(74) Representative: Wennborg, Johan

(56) References cited:
- GB-A- 2 235 269
- US-A- 2 070 005
- US-A- 2 983 179
- US-A- 3 382 753
- US-A- 3 857 349
- US-A- 5 674 025

## Description

### Field of the invention

The invention relates to a fixing device for doors, gates and frames and constituent parts thereof. The invention also relates to a method of manufacturing such a device.

### Background of the invention

In the case of sheet metal doors, gates and door frames and especially in the case of fire doors and security doors as well as sliding gates there is a need to use screw fastenings to fix various sheet metal parts to one another, to the door, the gate and the frame or to the wall to which the frame is fixed. Various sheet metal reinforcing elements are used, for example, such as front edge and rear edge struts and reinforcements for fitting adjusting screws, door closers, rear edge pins, fixtures and fittings, such as striker plates, locks, flush bolts and escape fittings, for example. Various types of assembly parts such as profiles for fastening glass panes and other structural elements such as internal sound insulation panels are also used. Some of these reinforcing elements, assembly parts and other structural elements may be fixed to the door or the frame by means of screw fastenings and therefore have internally threaded screw holes or externally threaded pins. Other such sheet metal parts may be fixed to the door or the frame in some other way, but have internal or external threads so that they can be fixed to some other element by means of screw fastening. It is also common for the actual door or frame to be provided with threads for connection to some other element by means of a screw fastening.

Threaded sheet metal parts are for example disclosed in US 3 857 349, US 3 382 753, US 2 070 005, US 5 674 025 or GB 2 235 269 A.

One example of such sheet metal parts are so-called fixing plates for adjusting and fixing door frames in door openings. The fixing plates may be welded fast to U-shaped profiles, for example, which form side members of the frame and comprise internally threaded through-holes to receive adjusting screws or so-called sleeve nuts.

In some cases the frame parts of the door hinges may be fixed to such fixing plates. The suspension force is thereby transferred from the door leaf directly to the wall, so that it does not place any significant load on the frame. Regardless of whether this is the case or not, the fixing plates should be rigid and strong and they are therefore usually made of relatively thick, bent sheet steel.

According to the prior art the internally threaded holes, which receive the adjusting screws, are formed by bending a circular cylindrical collar upwards from a plane section of the fixing plate. An internal thread is then formed in the hole by means of a conventional thread cutting operation.

In the case of other such sheet metal parts for doors, frames and sliding gates, where the sheet metal parts have an internally threaded hole for a screw fastening, the threaded hole may comprise a similar arrangement with a circular cylindrical threaded collar or with a nut, internally threaded by means of a conventional thread cutting operation, which is welded or otherwise fixed to the sheet metal part.

### Summary of the invention

An object of the invention is to provide a fixing device for doors, gates and frames which will afford an improved screw fastening for fixing the device to other elements. A further object of the invention is to provide a fixing device, by means of which a strong and reliable screw fastening can be achieved in a simple, rapid and cost-effective way.

These objects are achieved by a fixing device of the type which is specified in Claim 1. The fixing device comprises a base section, which is made from a stiff sheet metal and which has a general base plane, the base section comprising a first of two interacting threads forming part of a threaded fastening. According to the invention the base part comprises a number of sheet metal flaps bent from the base plane, the flaps defining a segmented first thread with at least one thread segment which is designed for interacting, threaded engagement with a second constituent thread of the threaded fastening. For the remaining features of the claimed fixing device, reference is made to the wording of claim 1.

With the fixing device according to the invention, the first constituent thread of a threaded fastening can be produced by a single stamping and bending operation. This dispenses entirely with the conventional thread cutting operation that was previously necessary in order to produce the first thread. This eliminates one machining stage in the manufacturing process and the corresponding transfers and intermediate stocks between machines for different machining operations. It also eliminates the use of cutting fluid and having to deal with swarf, which would otherwise be necessary in the case of conventional thread machining. The invention instead allows the entire fixing device including the first thread to be ready-manufacture on one and the same stamping and bending machine. This allows a substantially simpler and less costly manufacturing process than has hitherto been possible. The flaps formed from the relatively stiff sheet metal, which define the first thread, also ensure a stable threaded fastening, affording a strong, rigid fastening of the fixing device to another element. For example, flaps which are formed in a 2 mm-thick sheet metal are provided with a threaded length of 10 to 20 mm, depending on the thread forming method and thread diameter, which lends good stability to the threaded fastening. If so required, the bent flaps may be invested with a certain elastic flexibility, which allows the thread segment of the first thread to be self-centred in the thread profile of the second thread. This allows greater dimensional tolerances in the stamping out and bending of the flaps. The flaps may furthermore be endowed with an elastic flexibility which will allow the element comprising the second thread to be pressed axially relative to the flaps instead of being screwed in, the thread segment of the first thread being snapped into engagement with the second thread on said element. This serves to facilitate the joining of the threaded fastening.

The flaps may define an internal or an external thread. Where the flaps define an internal thread, the smallest possible thread diameter can be made smaller than when the flaps define an external thread, which in certain applications may constitute a considerable advantage. It is also possible for the flaps to define both an internal and an external thread for interacting threaded engagement with corresponding threads in two different concentric threaded fastenings.

The thread segments on the flaps may be formed in various ways. For example, a thread segment may be defined by a thread depression impressed in one of the flaps. A thread segment may also be defined by a free end section of one or more of the flaps. The free end section may then comprise an end surface of substantially the same height as the sheet metal thickness, a thread segment being defined by an edge of the end surface of one of the flaps, said edge engaging in the thread profile of the other thread. The free end section may also comprise a tip of a thickness less than the sheet metal thickness, a thread segment being defined by the tip of one of the flaps. All or just one or some of the flaps may be provided with such thread segments as defined in any of the aforementioned ways. It is also possible for the various flaps to have different types of thread segment.

The fixing device may comprise a number of first flaps, which are bent in a first direction from the base plane. This results in a single bending operation in which all flaps are bent in the same direction. This embodiment also allows that, if the flaps are endowed with a sufficiently elastic flexibility, the element which carries the second thread is pressed axially into engagement with the thread segments of the first thread.

In order to achieve a better guiding of the element carrying the second thread and to hold this more securely in a radial and an axial direction, end sections of the first flaps may be arranged at a minimum of two different intervals from the base plane, so that the thread segments engage with thread grooves in different axial positions on said element.

In order to further improve the guiding of said elements and the stability of the threaded fastening, the fixing device may comprise second flaps, which are bent in a second direction from the base plane. In this embodiment self-locking serves to counteract axial displacement without turning of the element.

A further simplified embodiment can be achieved if one or just some of the flaps are designed as a thread flap with a thread segment and at least one of the other flaps is designed as a support flap, which is designed to bear supportively against the thread land of the second thread.

The invention also relates to a method of manufacturing a fixing device according to Claim 11. The method according to the invention has corresponding objects and advantages to the fixing device described above.

Further objects and advantages of the invention are set forth in the detailed description below and in the patent claims.

### Brief description of the drawings

Various exemplary embodiments of the invention will be described in detail below with reference to the drawings, in which
Fig. 1a is a plan view from the front of a door and a frame.
Fig. 1b is a detail to a larger scale showing the door and frame shown in Fig. 1a.
Fig. 1c is a perspective view of the detail shown in Fig. 1b.
Fig. 1d is a perspective view, corresponding to that in Fig. 1c, of another detail in Fig. 1a.
Fig. 2 is a schematic, perspective view which illustrates various steps in the manufacture of a fixing device according to the invention.
Fig. 3a is a plan view from above of a part of a fixing device according to a first embodiment of the invention during one manufacturing stage.
Fig. 3b is a perspective view of the part shown in Fig. 3a when it is completed.
Fig. 3c is a perspective view corresponding to that in Fig. 3b and shows a threaded screw which is received in the part of the fixing device.
Figs. 4a-4c are views corresponding to those in Figs. 3a-c and show a part of a fixing device according to a second embodiment of the invention.
Figs. 5a-5c are views corresponding to those in Figs. 3a-c and show a part of a fixing device according to a third embodiment of the invention.
Figs. 6a-6c are views corresponding to those in Figs. 3a-c and show a part of a fixing device according to a fourth embodiment of the invention.
Figs. 7a-7c are views corresponding to those in Figs. 3a-c and show a part of a fixing device according to a fifth embodiment of the invention.
Figs. 8a-8b are views corresponding to those in Figs. 3a and 3c and show a part of a fixing device according to a sixth embodiment of the invention.
Fig. 9 is a view corresponding to that in Fig. 3c and shows a part of a fixing device according to a seventh embodiment of the invention.

### Detailed description of exemplary embodiments

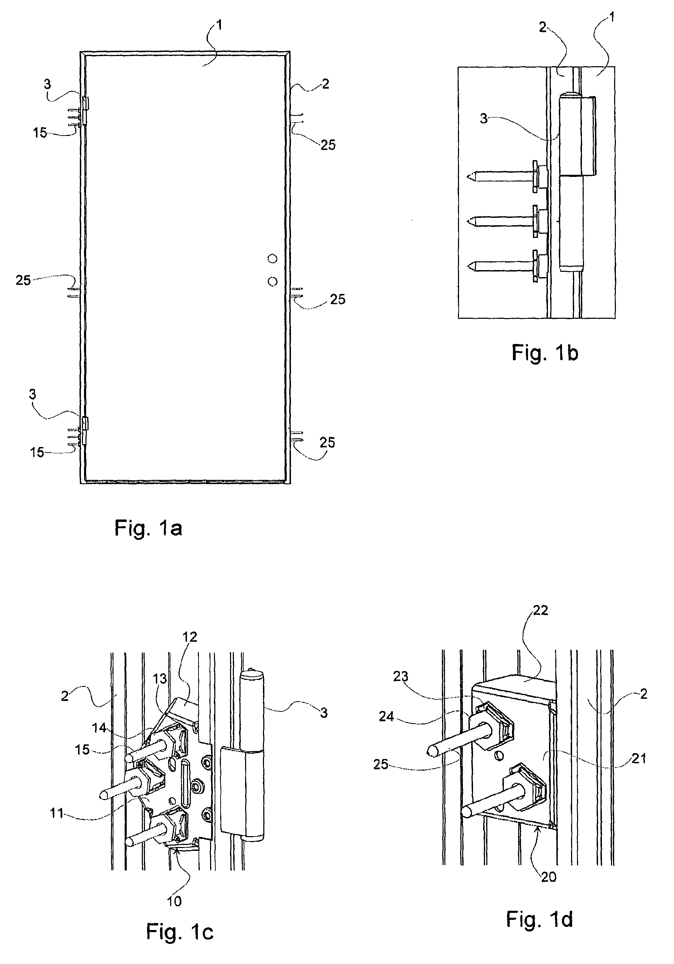

Fig. 1a shows a fire door. The door comprises a door leaf 1 and a frame 2. The door leaf 1 and the frame 2 are formed from bent sheet steel and comprise reinforcements and insulation material usual in fire doors. The door leaf 1 is hung on the frame 2 by means of hinges 3. The frame 2 is fixed to a door opening in a wall (not shown). A number of fixing devices according to the invention in the form of fixing plates 10, 20 are fixed to the side of the U-shaped side members of the frame facing the wall. The fixing plates 10, 20 are fixed to side members of the frame. As will be seen most clearly from Figs. 1b, 1c and 1d, the fixing plates each have a plane base section 11, 21, which defines a general base plane for the fixing plate, and a number of edge sections 12, 22, which are bent down from the base section and which are welded to the side members of the frame. Each fixing plate 10, 20 is provided with a number of through-holes 13 , 23 made through the base section 11, 21, which have a first, internal thread. Sleeve nuts 14, 24 having a second, external thread, are screwed into the threaded holes 13, 23. The sleeve nuts 14, 24 each have a central axial through-opening, in which a threaded fixing screw 15, 25 is received.

As indicated in Figs. 1c and 1d, and as will be described in more detail below, the through-holes and internal threads in the fixing plates 10, 20 are formed by flaps bent from the base section.

When fitting the frame 2 in the door opening, the frame is first placed in the door opening. The sleeve nuts 14, 24 are then screwed outwards towards the end surface of the wall facing the frame, in which the door opening is arranged. The sleeve nuts 14, 24 are screwed out until their end surfaces come to bear against the end surface of the wall, thereby adjusting the position of the frame in relation to the wall. The frame is then fixed in this position by threading the fixing screws 15, 25 in through the axial holes in the sleeve nuts 14, 24 and screwing them fast to the wall. The sleeve nuts 14, 24 and fixing screws 15, 25 can be screwed in in that corresponding pluggable holes (not shown) are made in the side members of the frame. At the end remote from the wall the sleeve nut furthermore comprises a hexagon socket, which allows the sleeve nut to be turned by means of a hexagon socket screw key. The fixing plate 10 shown in Fig. 1c has three through-holes 13 to receive sleeve nuts 14 and fixing screws 15, whilst the fixing plate 20 shown in Fig. 1d has only two such holes 23. As indicated in Figs. 1a and 1c, the fixing plates 10 of the type shown in Fig. 1c are arranged at the two points on the frame 2 where the frame parts of the hinges 3 are fixed. The frame parts of the hinges 3 are fixed directly to the fixing plate 10, so that the hanging force of the door leaf is transferred to the wall via the fixing plate without placing any appreciable load on the frame.

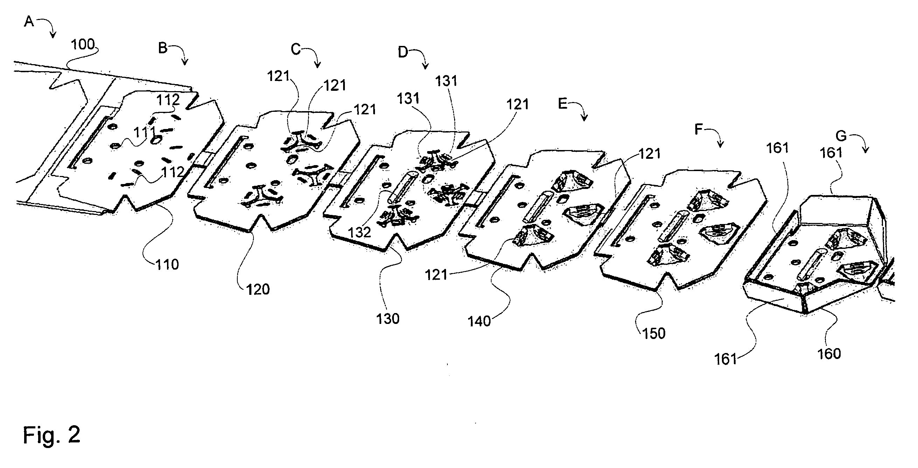

Fig. 2 illustrates schematically the steps in a method of manufacturing a fixing device in the form of a fixing plate of the type shown in Fig. 1c.

In a first step A of the method a substantially plane and relatively stiff sheet steel 100 is fed to a combined stamping and bending machine (not shown). In the second step B a part of a blank 110 for the fixing plate is formed by stamping out certain parts of the sheet steel in order to form a part of the contour of the blank. In this step a number of through-holes 111, 112 are also formed by stamping. The through-holes 112 are elongated in the base plane defined by the plane upper side of the blank, not visible in Fig. 2. And later serve as bending guides. In the third step C further sheet metal parts are stamped out, so that the blank 120 substantially takes on its final plane contour. In this step, three sets of flaps 121 arranged radially around a central point are also formed by stamping. The flaps 121 are formed by stamping out an intervening trident section of sheet metal. In the fourth step D a number of depressions 131, 132 are impressed from the underside of the blank 130 visible in the drawing. One of the depressions 132 constitutes a strengthening deformation which is arranged on the base section of the finished fixing plate. This strengthening depression 132 from the underside is designed so that the opposite side of the blank 130 to the upper side has a corresponding convexity. In this step D three elongated thread depressions 131 are also impressed parallel to one another in each of the flaps 121, according to the thread profile selected. In the fifth step E, the flaps 121 are bent so that they will project upwards substantially at right angles to the base plane of the blank 140. This bending operation can be suitably performed by a combined stamping and bending tool forming part of the stamping machine. In the seventh step F the angle of the thread flaps is calibrated and the blank 150 is separated from the connected sheet metal 100 by means of a stamping or cutting tool. In the final step G the ultimate fixing plate 160 is prepared through a bending operation in which the edges 161 of the fixing plate 160 are bent down from the base plane.

With the method according to the invention, therefore, a complete fixing plate with an internally threaded through-hole can be produced directly on one and the same stamping machine from a plane sheet metal.

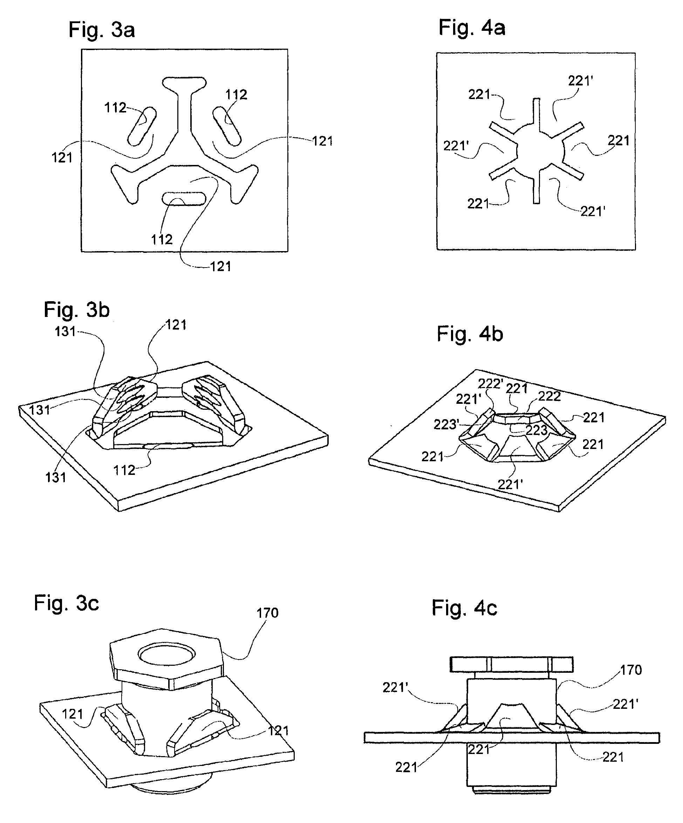

Fig. 3a shows a more detailed top view of a part of the blank 120 illustrated at step C in Fig. 2. The figure shows how the flaps 121 are formed by stamping out an intervening trident shape and the elongated, punched through-holes 112, which constitute bending guides when the flaps 121 are bent up from the base plane, as shown in Fig. 3b. Fig. 3b also shows how each flap 121 has three parallel thread depressions 131, which each constitute a thread segment of an internal thread. Fig. 3c shows how an externally threaded screw 170 in the form of a sleeve nut is threaded and received in the internal thread that is defined by the thread segments 131 formed by the thread depressions. In the examples shown in the drawings an internal M18 thread is formed by flaps which are arranged on a blank made from 2 mm thick sheet steel.

Fig. 4a shows a part of a blank, corresponding to Fig. 3a, for manufacturing a fixing device according to a second embodiment of the invention. In this embodiment two sets of flaps 221, 221' are formed for each threaded hole. The flaps 221 in a first set are shorter than the flaps 221' in a second set. The flaps comprise free end sections 222 and 222' respectively. As will be seen most clearly from Fig. 3b and 3c, after bending up from the base plane the end sections 222 of the shorter flaps 221 will be situated on a lower level than the end sections 222' of the longer flaps 221'. As can be seen most clearly from Fig. 4c, the screw 170 threaded between the flaps 221, 221' will thereby be in threaded engagement with the flaps at different axial positions along the screw, affording an improved control and stability. In the example shown in Figs. 4a-4c, the thread segments of each flap consist of the edge 223, 223' between the free end surface of the respective flap 221, 221' and its lateral surface facing downwards towards the base plane. As will be seen from Fig. 4b, the end surfaces are of substantially the same height as the sheet metal thickness, the edges 223, 223' consisting of substantially right-angled corner lines.

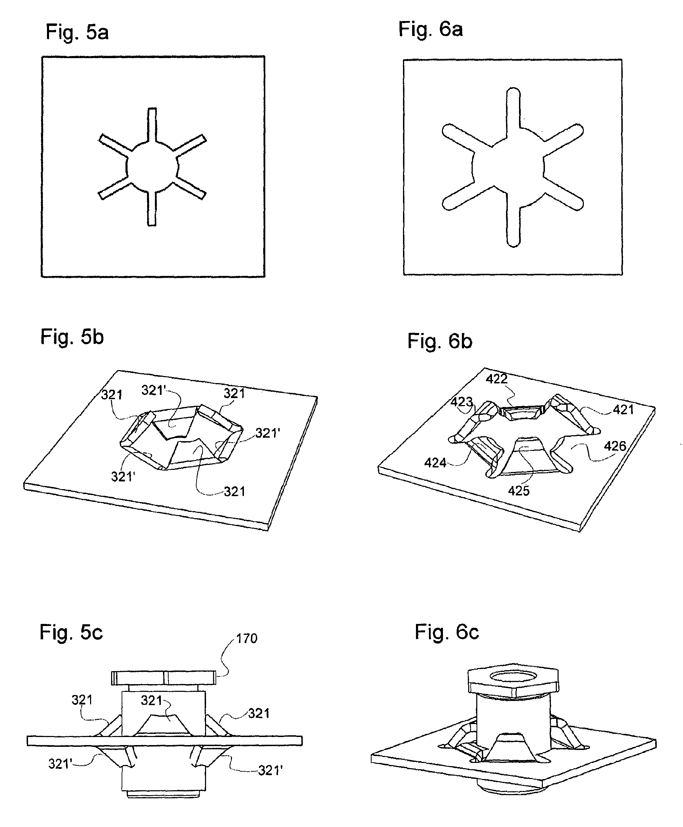

Figs. 5a-5c show an embodiment which largely corresponds to the embodiment shown in Figs. 4a-4c. However, the embodiment in Figs. 5a-5c does differ from the preceding one in that the flaps 321, 321' comprise two sets of flaps of substantially equal length, but which after bending project in different directions from the base plane. As will be seen most clearly from Figs. 5b and 5c, this embodiment therefore comprises a first set of flaps 321, which project upwards from the base plane, and a second set of flaps 321', which project downwards from the base plane. As will be seen most clearly from Fig. 5c, this affords a further increase in the axial interval between the thread engagement of the first and second sets with the screw 170. This affords a further improvement in the control and stability, which corresponds to an increased thread length in a threaded fastening of conventional design.

In the embodiment shown in Figs. 6a-6c six flaps 421-426 are arranged so that they project in the same direction, upwards from the base plane. However, the end section of each flap is arranged at a different height above the base plane from that of the other end sections. Each end section furthermore has a pressed tip, which constitutes the thread segment of each flap for engagement with the corresponding external thread on the screw 170. If so desired, the tip can also be impressed at an angle, so that it matches the relevant thread pitch. This embodiment is used especially with wider flaps and thereby wider thread segments.

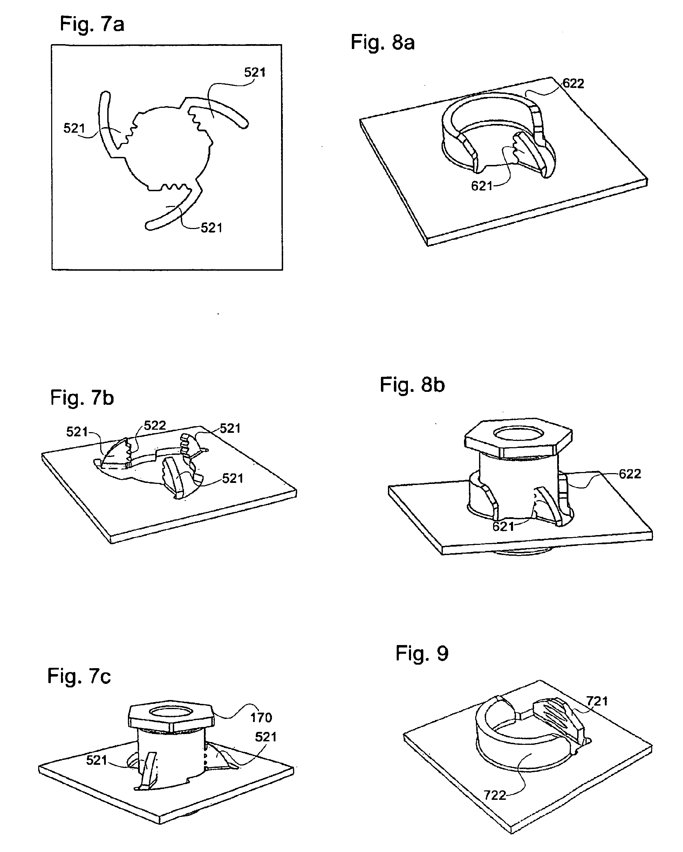

In the embodiment shown in Figs 7a-7c the thread segment of each flap 521 is formed by thread indentations 522, one above the other and substantially parallel with one another and with the base plane, which are stamped out of the sides of the flaps 521 facing a centre line for the internal thread that is defined by the thread segments. As will be seen most clearly from Fig. 7b, the flaps 521 in this example are bent upwards along a substantially radial bending line instead of along a tangential bending line, as is the case, for example, in the embodiment shown in Figs. 2 and 3a-3c.

In the embodiments shown in Figs. 8a, 8b and 9 the fixing device comprises just two flaps, the one 621, 721 consisting of a thread flap which is formed with a thread segment. In the embodiment shown in Figs. 8a-8b this thread flap is formed like the flaps in the example shown in Figs. 7a-7c, whilst Fig. 9 shows an embodiment in which the thread flap 721 is formed like the example shown in Figs. 2 and 3a-3c. In both embodiments the second flap 622, 722 constitutes a support flap, which is formed as a segment of a circular cylindrical flange bent or pressed upwards from the base plan. As will be seen most clearly from Figs. 8a and 9, the support flaps 622, 722 are formed without a thread segment, these flaps instead lending support by bearing against the thread land of the external thread of the screw 170, rather than by threaded engagement with the screw.

Exemplary embodiments of the invention have been described above. For example, the various exemplary embodiments of flaps and thread segments may be combined in one and the same fixing device. The examples described above illustrate only how internal threads are defined by the flaps. It will be appreciated, however, that the flaps, simply by bending or by bending and impressing thread depressions, can be made to define an external thread for threaded engagement with an internal thread on a nut or some other internally threaded element, for example. Even in such externally threaded flaps, the thread segments may be defined by an edge or a tip of an end section of one or more flaps and/or by thread depressions or thread indentations, which in such a case are arranged on opposite sides of the flaps. It will further be appreciated that the invention is not limited to fixing plates but may comprise a number of different fixing devices for doors, frames and gates, where a sheet metal part is to be united with another part by means of a threaded fastening. Examples of such applications are given in the background section in the present application.

## Claims

1. Fixing device for doors comprising a door leaf, a frame and hinges, which fixing device comprises a fixing plate (10) which can be fixed to a side member of the frame and which has a base section, which is made from a stiff sheet metal and which has a general base plane, the base section comprising a first of two interacting threads forming part of a threaded fastening, wherein the base section comprises a number of sheet metal flaps (121, 221, 221', 321, 321', 421-426, 521, 621, 721) bent from the base plane, the flaps defining a segmented first internal thread with at least one thread segment (131, 223, 223', 522) which is designed for interacting, threaded engagement with a second constituent thread of the threaded fastening **characterized in that** the second constituent thread is an external thread which is arranged on a sleeve nut (14) which is threadedly received in the first internal thread and which has a central axial through-opening in which a threaded fixing screw (15) is received and **in that** a frame part of a hinge (3) can be fixed directly to the fixing plate (10)

2. Fixing device according to Claim 1, wherein a thread segment is defined by a thread depression (131) impressed in one of the flaps.

3. Fixing device according to one of Claims 1-2, wherein a thread segment is defined by a free end section of one of the flaps (221, 221' , 321, 321', 421-426).

4. Fixing device according to Claim 3, wherein the free end section comprises an end surface (222, 222') of substantially the same height as the sheet metal thickness, a thread segment being defined by an edge (223, 223') of the end surface of one of the flaps.

5. Fixing device according to Claim 3, wherein the free end section comprises a tip of a thickness less than the sheet metal thickness, a thread segment being defined by the tip of one of the flaps (421-426).

6. Fixing device according to one of Claims 1-5, comprising a number of first flaps (121, 221, 221', 321, 421-426, 521), which are bent in a first direction from the base plane.

7. Fixing device according to Claim 6, wherein the end sections of the first flaps (221, 221', 421-426) are arranged at at least two different intervals from the base plane.

8. Fixing device according to Claim 6 or 7, comprising second flaps (321') which are bent in a second direction from the base plane.

9. Fixing device according to one of Clams 1-8, comprising at least one thread flap (621, 721) with at least one thread segment and at least one support flap (622, 722), which is designed to bear supportively against the second thread of the threaded fastening.

10. Fixing device according to one of Claims 1-9, comprising at least one thread flap (521), which is bent from the base plane and which on a side of the thread flap facing a centre line of the thread has thread indentations (522) arranged one above the other.

11. Method of manufacturing a fixing device for doors comprising a door leaf, a frame and hinges and of mounting said device to the frame and hinges, in which:
- a substantially plane and stiff sheet metal (100) is provided,
- a substantially plane blank (110, 120, 130, 140, 150) for the fixing device is stamped out of the sheet metal,
- a fixing device comprising a fixing plate with a base part having a general base plane and a first of two threads interacting in a threaded fastening is formed from the blank,
wherein the step in which a fixing device is formed from the blank comprises:
- forming the base part of the fixing device with the general base plane and a number of flaps (121) from the plane blank by stamping,
- bending the flaps so that they assume an angle in reflation to the base plane in order to define a segmented first internal thread with at least one thread segment for interacting threaded engagement with a second thread forming part of the threaded fastening and
- fixing the fixing plate to a side member of a frame, **characterized in** the steps of:
- providing a sleeve nut (14) having a second external thread and a central axial through-opening, in which a threaded fixing screw (15) is received,
- threadedly engaging the second external thread of the sleeve nut (14) with the first internal thread, and fixing a frame part of a hinge directly to the fixing plate (10).

12. Method according to Claim 11, comprising to form at least one thread depression (131), which defines a thread segment of the first thread, by impressing at least one of the flaps (121).

13. Method according to Claim 11 or 12, comprising to bend at least one of the flaps so that an end section of the flap defines a thread segment of the first thread.

14. Method according to one of Claims 11-13, wherein all operations for forming the fixing device from the plane sheet metal consist of stamping operations or bending operations.

## Patentansprüche

1. Befestigungsvorrichtung für Türen, umfassend ein Türblatt, einen Rahmen und Scharniere, wobei die Befestigungsvorrichtung eine Befestigungsplatte (10) umfasst, welche an einem zweiten Bauteil des Rahmens befestigt werden kann, und welche einen Basisabschnitt aufweist, welcher aus einem steifen Metallblech besteht, und welcher eine allgemeine Basisebene aufweist, wobei der Basisabschnitt ein erstes von zwei zusammenwirkenden Gewinden umfasst, die Teil einer Gewindebefestigung sind, wobei der Basisabschnitt eine Anzahl von Klappen aus Metallblech (121, 221, 221', 321, 321', 421 - 426, 521, 621, 721) umfasst, die von der Basisebene weggebogen sind, wobei die Klappen ein segmentiertes erstes Innengewinde mit zumindest einem Gewindesegment (131, 223, 223', 522) definieren, welches gestaltet ist für einen zusammenwirkenden Gewindeeingriff mit einem zweiten Gewindeglied der Gewindebefestigung, **dadurch gekennzeichnet, dass** das zweite Gewindeglied ein Außengewinde ist, welches auf einer Hülsenmutter (14) angeordnet ist, welche gewindemäßig in dem ersten Innengewinde aufgenommen ist und welche eine zentrale axiale Durchgangsöffnung aufweist, in welcher eine Gewindebefestigungsschraube (15) aufgenommen ist, und **dadurch**, dass ein Rahmenteil eines Scharniers (3) direkt an der Befestigungsplatte (10) befestigt werden kann.

2. Befestigungsvorrichtung nach Anspruch 1, wobei ein Gewindesegment durch eine Gewindesenke (131) definiert ist, die in eine der Klappen eingeprägt ist.

3. Befestigungsvorrichtung nach irgendeinem der Ansprüche 1 - 2, wobei ein Gewindesegment durch einen freies-Ende-Abschnitt einer der Klappen (221, 221', 321, 321', 421 - 426) definiert ist.

4. Befestigungsvorrichtung nach Anspruch 3, wobei der freies-Ende-Abschnitt eine Endoberfläche (222, 222') mit im wesentlichen derselben Höhe wie die Metallblechdicke umfasst, wobei ein Gewindesegment durch eine Kante (223, 223') der Endoberfläche einer der Klappen definiert ist.

5. Befestigungsvorrichtung nach Anspruch 3, wobei der freies-Ende-Abschnitt eine Spitze mit einer Dicke umfasst, die geringer ist als die Metallblechdicke, wobei ein Gewindesegment durch die Spitze einer der Klappen (421 - 426) definiert ist.

6. Befestigungsvorrichtung nach einem der Ansprüche 1 - 5, umfassend eine Anzahl erster Klappen (121, 221, 221', 321, 421 - 426, 521), welche in einer ersten Richtung von der Basisebene gebogen sind.

7. Befestigungsvorrichtung nach Anspruch 6, wobei die Endabschlüsse der ersten Klappen (221, 221', 421 -426) mit zumindest zwei unterschiedlichen Abständen von der Basisebene angeordnet sind.

8. Befestigungsvorrichtung nach Anspruch 6 oder 7, umfassend zweite Klappen (321'), welche in einer zweiten Richtung von der Basisebene gebogen sind.

9. Befestigungsvorrichtung nach einem der Ansprüche 1 - 8, umfassend zumindest eine Gewindeklappe (621, 721) mit zumindest einem Gewindesegment und zumindest einer Stützklappe (622, 722), welche gestaltet ist, um unterstützend gegen das zweite Gewinde der Gewindebefestigung gelagert zu sein.

10. Befestigungsvorrichtung nach einem der Ansprüche 1 - 9, umfassend zumindest eine Gewindeklappe (521), welche von der Basisebene gebogen ist und welche auf einer Seite der Gewindeklappe, die einer Mittellinie des Gewindes zugewandt ist, Gewindeprägungen (522) aufweist, die übereinander angeordnet sind.

11. Verfahren zur Herstellung einer Befestigungsvorrichtung für Türen, umfassend ein Türblatt, einen Rahmen und Scharniere, und zum Befestigen der Vorrichtung an dem Rahmen und an den Scharnieren, in welchem:
- ein im wesentlichen ebenes und steifes Metallblech (100) bereitgestellt wird,
- ein im wesentlichen ebenes Teil (110, 120, 130, 140, 150) für die Befestigungsvorrichtung aus dem Metallblech ausgestanzt wird,
- die Befestigungsvorrichtung umfasst eine Befestigungsplatte mit einem Basisteil mit einer allgemeinen Basisebene und ein erstes von zwei Gewinden, die in einer Gewindebefe-stigung zusammenwirken, und wird aus dem ausgestanzten Teil hergestellt,
wobei der Schritt, in welchem eine Befestigungsvorrichtung aus dem ausgestanzten Teil gebildet wird, umfasst:
- Bilden des Basisteils der Befestigungsvorrichtung mit der allgemeinen Basisebene und einer Anzahl von Klappen (121) aus dem ebenen ausgestanzten Teil durch Stanzen,
- Biegen der Klappen, so dass sie einen Winkel in Bezug auf die Basisebene einnehmen, um ein segmentiertes erstes Innengewinde mit zumindest einem Gewindesegment zum zusammenwirkenden Gewindeeingriff mit einem zweiten Gewinde zu definieren, welches einen Teil der Gewindebefe-stigung bildet, und
- Befestigen der Befestigungsplatte an ein Seitenbauteil eines Rahmens, **gekennzeichnet durch** die folgenden Schritte:
- Bereitstellen einer Hülsenmutter (14) mit einem zweiten Außengewinde und einer zentralen axialen Durchgangsöffnung, in welcher eine Gewindebefestigungsschraube (15) aufgenommen ist,
- gewindemäßiges Eingreifen des zweiten Außengewindes der Hülsenmutter (14) mit dem ersten Innengewinde, und
- Befestigen eines Rahmenteils eines Scharniers direkt an der Befestigungsplatte (10).

12. Verfahren nach Anspruch 11, umfassend das Bilden von zumindest einer Gewindesenke (131), welche ein Gewindesegment des ersten Gewindes durch Einprägen von zumindest einer der Klappen (121) definiert.

13. Verfahren nach Anspruch 11 oder 12, umfassend das Biegen von zumindest einer der Klappen, so dass ein Endabschnitt ein Gewindesegment des ersten Gewindes definiert.

14. Verfahren nach einem der Ansprüche 11 - 13, wobei alle Abläufe zum Bilden der Befestigungsvorrichtung aus dem ebenen Metallblech aus Stanzabläufen oder Biegeabläufen bestehen.

## Revendications

1. Dispositif de fixation pour portes comprenant un battant, un dormant et des charnières, lequel dispositif de fixation comprend une plaque de fixation (10) qui peut être fixée à un élément latéral du dormant et qui a une section de base qui est constituée d'une tôle rigide et qui a un plan de base général, la section de base comprenant un premier de deux filetages conjugués faisant partie d'une fixation filetée, la section de base comprenant un certain nombre de pattes en tôle (121, 221, 221', 321, 321', 421-426, 521, 621, 721) pliées à partir du plan de base, les pattes définissant un premier filetage interne segmenté avec au moins un segment de filetage (131, 223, 223', 522) qui est conçu pour l'engagement fileté conjugué avec un second filetage constitutif de la fixation filetée, **caractérisé en ce que** le second filetage constitutif est un filetage externe qui est disposé sur un manchon fileté (14) qui est reçu par vissage dans le premier filetage interne et qui a une ouverture traversante axiale centrale dans laquelle est reçue une vis de fixation filetée (15), et **en ce qu'**une partie côté dormant d'une charnière (3) peut être fixée directement à la plaque de fixation (10).

2. Dispositif de fixation selon la revendication 1, dans lequel un segment de filetage est défini par un renfoncement de filetage (131) matricé dans une des pattes.

3. Dispositif de fixation selon une des revendications 1 ou 2, dans lequel un segment de filetage est défini par une section d'extrémité libre d'une des pattes (221, 221', 321, 321', 421-426).

4. Dispositif de fixation selon la revendication 3, dans lequel la section d'extrémité libre comprend une surface d'extrémité (222, 222') ayant sensiblement la même hauteur que l'épaisseur de la tôle, un segment de filetage étant défini par un bord (223, 223') de la surface d'extrémité d'une des pattes.

5. Dispositif de fixation selon la revendication 3, dans lequel la section d'extrémité libre comprend un bout dont l'épaisseur est inférieure à l'épaisseur de la tôle, un segment de filetage étant défini par le bout d'une des pattes (421-426).

6. Dispositif de fixation selon une des revendications 1 à 5, comprenant un certain nombre de premières pattes (121, 221, 221', 321, 421-426, 521) qui sont pliées dans une première direction à partir du plan de base.

7. Dispositif de fixation selon la revendication 6, dans lequel les sections d'extrémité des premières pattes (221, 221', 421-426) sont disposées à au moins deux intervalles différents à partir du plan de base.

8. Dispositif de fixation selon la revendication 6 ou 7, comprenant des secondes pattes (321') qui sont pliées dans une seconde direction à partir du plan de base.

9. Dispositif de fixation selon une des revendications 1 à 8, comprenant au moins une patte de filetage (621, 721) avec au moins un segment de filetage et au moins une patte de support (622, 722) qui est conçue pour porter, avec fonction de support, contre le second filetage de la fixation filetée.

10. Dispositif de fixation selon une des revendications 1 à 9, comprenant au moins une patte de filetage (521) qui est pliée le long d'une ligne sensiblement radiale à partir du plan de base et qui, d'un côté de la patte de filetage dirigé vers une ligne centrale du filetage, comporte trois indentations (522) disposées l'une au-dessus de l'autre.

11. Procédé de fabrication d'un dispositif de fixation pour portes comprenant un battant, un dormant et des charnières, ainsi que de montage dudit dispositif sur le dormant et les charnières, dans lequel :
- une tôle (100) sensiblement plane et rigide est prévue,
- une ébauche sensiblement plane (110, 120, 130, 140, 150) du dispositif de fixation est découpée dans la tôle,
- un dispositif de fixation comprenant une plaque de fixation avec une pièce de base ayant un plan de base général et un premier de deux filetages conjugués dans une fixation filetée est formé à partir de l'ébauche,
l'étape dans laquelle un dispositif de fixation est formé à partir de l'ébauche comprenant :
- formage de la pièce de base du dispositif de fixation avec le plan de base général et un certain nombre de pattes (121) par estampage à partir de l'ébauche plane,
- pliage des pattes de façon qu'elles fassent un angle avec le plan de base afin de définir un premier filetage interne segmenté avec au moins un segment de filetage pour l'engagement fileté conjugué avec un second filetage faisant partie de la fixation filetée et
- fixation de la plaque de fixation à un élément latéral d'un dormant,
**caractérisé par** les étapes suivantes :
- mise en oeuvre d'un manchon fileté (14) pourvu d'un second filetage externe et d'une ouverture traversante axiale centrale dans laquelle est reçue une vis de fixation filetée (15),
- engagement par vissage du second filetage externe du manchon fileté (14) avec le premier filetage interne, et
- fixation d'une partie côté dormant d'une charnière directement à la plaque de fixation (10).

12. Procédé selon la revendication 11, comprenant la réalisation d'au moins un renfoncement de filetage (131), qui définit un segment de filetage du premier filetage, par matriçage d'au moins une des pattes (121).

13. Procédé selon la revendication 11 ou 12, comprenant le pliage d'au moins une des pattes de façon qu'une section d'extrémité de la patte définisse un segment de filetage du premier filetage.

14. Procédé selon une des revendications 11 à 13, dans lequel toutes les opérations de formage du dispositif de fixation à partir de la tôle plane consistent en des opérations d'estampage ou de pliage.
